# FASCICULE DE BREVET EUROPEEN

(11) **EP 2 650 716 B1**
(45) Date de publication et mention de la délivrance du brevet: **05.11.2014**
(21) Numéro de dépôt: 13162788.7
(22) Date de dépôt: 08.04.2013
(51) Int. Cl.: G02B 27/04, G02B 27/22

(54) **Visionneuse stéréoscopique pliable**
Zusammenklappbares stereoskopisches Anzeigegerät
Collapsible stereoscopic viewer

(30) Priorité: 13.04.2012 FR 1253402
(43) Date de publication de la demande: 16.10.2013
(73) Titulaire: Sagniez, Philippe, 59300 Valenciennes (FR)
(72) Inventeur: Sagniez, Philippe, 59300 VALENCIENNES (FR)
(74) Mandataire: Cabinet Plasseraud

(56) Documents cités:
- EP-A2- 1 255 147
- WO-A1-92/22885
- FR-A1- 2 572 199
- GB-A- 600 954
- US-A- 1 912 233

## Description

La présente invention concerne le domaine des visionneuses, et, plus particulièrement, les visionneuses pliables, et a pour objet une visionneuse destinée pour la vision en relief d'une image stéréoscopique.

Dans ce domaine il est connu une visionneuse stéréoscopique pliable, constituée essentiellement d'un carton prédécoupé définissant une structure pliable, cette structure comprenant un élément support pour une image stéréoscopique et un élément support de deux optiques faisant face à l'élément support d'image en position déployée du dispositif. Les deux éléments supports sont séparés par un élément central et sont pliables de façon à pouvoir stocker la visionneuse à plat, dans une position de moindre encombrement. Un tel état de la technique est par exemple divulgué dans le document FR 2 828 745.

Il existe d'autres modèles de visionneuses qui se présentent sous la forme d'une boite transformable, en carton. Un tel état de la technique est par exemple divulgué dans le document FR 2 821 938. Ces boites sont destinées pour le visionnage d'images par transparence (diapositives), mais inadaptées pour le visionnage d'images imprimées sur support opaque, en raison du manque de luminosité.

De tels dispositifs de l'état de la technique, en matière souple tel que le carton, présentent toutefois une durée de vie limitée, la visionneuse se détériorant rapidement au fur et à mesure des opérations de dépliage/pliage de la visionneuse. Par ailleurs, l'utilisation de matière souple telle que du carton implique des déformations de la visionneuse ce qui, parfois, peut influer sur la distance focale des moyens de visionnage et ne permet donc pas un visionnage net de l'image.

Ces visionneuses s'avèrent ainsi fragiles et sont rarement réutilisables une fois détériorées.

De plus la fabrication des visionneuses de l'art antérieur peut être assez élaborée et leur utilisation nécessite un montage relativement long et fastidieux.

Le document GB 600,954 divulgue une visionneuse de poche pliable pour la lecture de documents. Le document US 1,912,233 divulgue une visionneuse pliable pour la stéréoscopie.

L'invention a notamment pour objectif de pallier les différents inconvénients de ces techniques connues.

Plus précisément, un objectif de l'invention est de fournir une visionneuse qui ait un faible encombrement lorsque stockée et puisse être utilisée rapidement.

Un autre objectif de la présente invention est de fournir une visionneuse permettant d'observer une image stéréoscopique de façon nette.

L'invention a également pour objectif, au moins dans un mode de réalisation particulier, de fournir une visionneuse qui soit robuste et peu coûteuse.

Encore un autre objectif de l'invention est, au moins dans un mode de réalisation particulier, de fournir une visionneuse qui soit simple à mettre en oeuvre.

Ces objectifs, ainsi que d'autres qui apparaîtront plus clairement par la suite, sont atteints selon l'invention à l'aide d'une visionneuse, pliable, destinée pour la vision en relief d'une image stéréoscopique.

Selon l'invention, la visionneuse comprend quatre éléments rigides, dont un élément support d'image, un élément support d'optiques pour deux optiques, et deux branches en forme de U, chacune des branches coopérant à l'une de ses extrémités avec ledit élément support d'image et, à l'autre extrémité de ladite branche avec ledit élément support d'optiques, lesdites branches étant articulées, d'une part, audit élément support d'image, suivant deux axes de pivot, parallèles entre eux, et d'autre part, audit élément support d'optiques, chacune des branches au moyen de deux pions, en vis-à-vis et coopérant au coulissement avec deux rails parallèles et disposés au niveau de deux bords dudit élément support d'optiques.

Ladite visionneuse pouvant passer d'une position de moindre encombrement, sensiblement à plat, dans laquelle lesdites branches ainsi que ledit élément support d'optiques sont rabattus contre ledit élément support d'image, vers une position d'utilisation, en volume, dans laquelle ledit élément support d'optique et ledit élément support d'image sont parallèles entre eux, écartés l'un de l'autre d'une distance définie par le déploiement des branches.

Selon un aspect avantageux de l'invention, dans la position de moindre encombrement les volumes intérieurs des branches en forme de U définissent un logement pour la réception de l'élément support d'optiques, au jeu d'emboitement près.

Selon une approche particulièrement simple, ledit élément support d'image et chacune des branches sont articulés en pivot au moyen de deux ergots dudit élément support d'image et coopérant avec deux orifices complémentaires des branches.

Avantageusement, ledit élément support d'image comprend une paroi plane sur laquelle est destinée à être plaquée une image, ainsi que des languettes de maintien au niveau des bords dudit élément support d'image, chaque languette de maintien étant écartée par rapport à ladite paroi plane afin de définir un espace d'insertion prévu pour la réception et le maintien d'un bord de l'image.

Préférentiellement, lesdits rails dudit élément support d'optiques comprennent des moyens de blocages des pions aux extrémités des rails conçus pour bloquer de manière réversible le coulissement dans ladite position d'utilisation en volume et/ou dans ladite position de moindre encombrement de la visionneuse.

Selon un aspect particulier de l'invention, ledit élément support d'image comprend des moyens de butée venant en contact avec chacune des branches dans ladite position d'utilisation, pour bloquer l'ouverture des branches.

Selon un aspect particulier de l'invention, l'élément support d'image, l'élément support d'optiques et les branches sont constitués chacun par une pièce plastique d'un seul tenant, lesdites pièces plastiques étant assemblées et articulées entre elles sans élément rapporté, grâce à des parties d'assemblage monoblocs avec lesdites pièces plastiques.

De manière avantageuse, ledit élément support d'optiques est une pièce plastique transparente, lesdites deux optiques d'un seul tenant avec ladite pièce plastique transparente.

L'invention concerne également un kit comprenant une visionneuse selon l'invention, et au moins une image stéréoscopique destinée à coopérer avec ledit élément support d'image de ladite visionneuse.

Selon un mode de réalisation du kit conforme à l'invention, ledit élément support d'image comprend un détrompeur, mâle, et coopérant avec une encoche de ladite image stéréoscopique pour assurer l'orientation et le positionnement centré de ladite image stéréoscopique sur ledit élément support d'image.

L'invention concerne également un procédé de fabrication d'une visionneuse selon l'invention comprenant les étapes suivantes :
- obtention par moulage d'un plastique de l'élément support d'image, l'élément support d'optiques et des branches ;
- assemblage de l'élément support d'image, l'élément support d'optiques et des branches grâce à des parties d'assemblage monoblocs avec lesdits éléments.

D'autres caractéristiques et avantages de l'invention apparaîtront plus clairement à la lecture de la description suivante d'un mode de réalisation particulier de l'invention, donnée à titre de simple exemple illustratif et non limitatif, et des dessins annexés, parmi lesquels :
- les figures 1a et 1b sont des vues de profil de la visionneuse selon l'invention en position d'utilisation et en position de moindre encombrement ;
- les figures 2a et 2b sont des vues de dessus et de profil de la visionneuse selon l'invention en position de moindre encombrement ;
- les figures 3a et 3b sont des vues de dessus et de profil de l'élément support d'image de la visionneuse selon l'invention ;
- les figures 4a et 4b sont des vues de dessus et de profil des branches de la visionneuse selon l'invention ;
- les figures 5a et 5b sont des vues de dessus et de profil de l'élément support d'optiques de la visionneuse selon l'invention.

Comme précédemment évoqué, le principe général de l'invention repose donc sur la mise en oeuvre d'une visionneuse, pliable, destinée pour la vision en relief d'une image stéréoscopique.

La visionneuse comprend quatre éléments rigides dont un élément support d'image 1 deux branches 2 et 2' en forme de U et un élément support d'optiques 3 pour un couple d'optiques 30.

Chacune des branches 2, 2' coopère à l'une de ses extrémités avec ledit élément support d'image 1 et, à l'autre extrémité de ladite branche avec ledit élément support d'optiques 3, lesdites branches 2,2' étant articulées , d'une part, audit élément support d'image 1, suivant deux axes de pivot, parallèles entre eux, et d'autre part, audit élément support d'optiques 3, chacune des branches 2,2' au moyen de deux pions 20, 20', en vis-à-vis et coopérant au coulissement avec deux rails 31,31' parallèles et disposés au niveau de deux bords dudit élément support d'optiques 3.

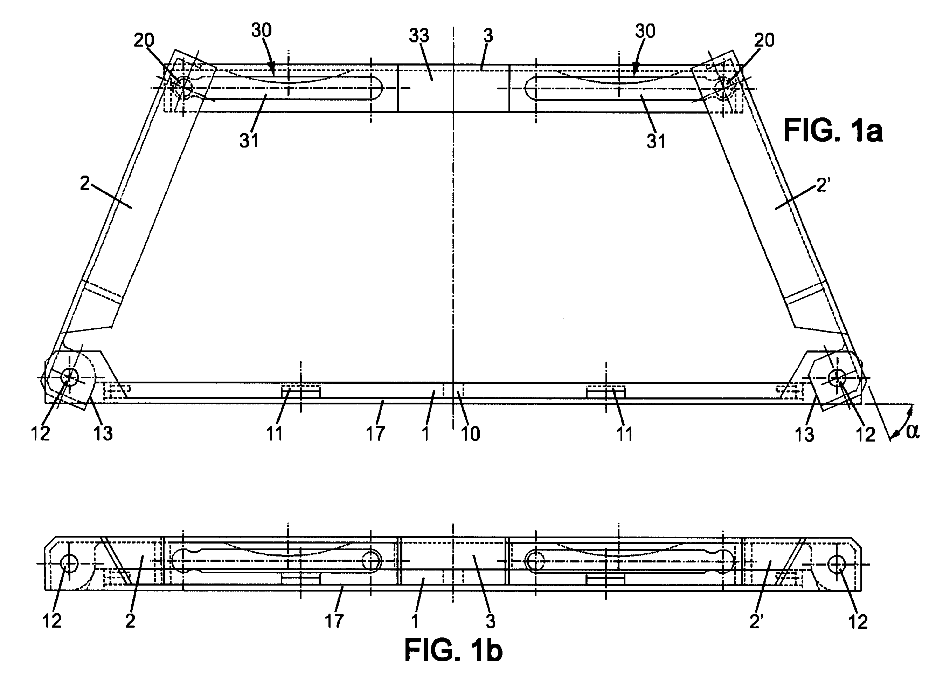

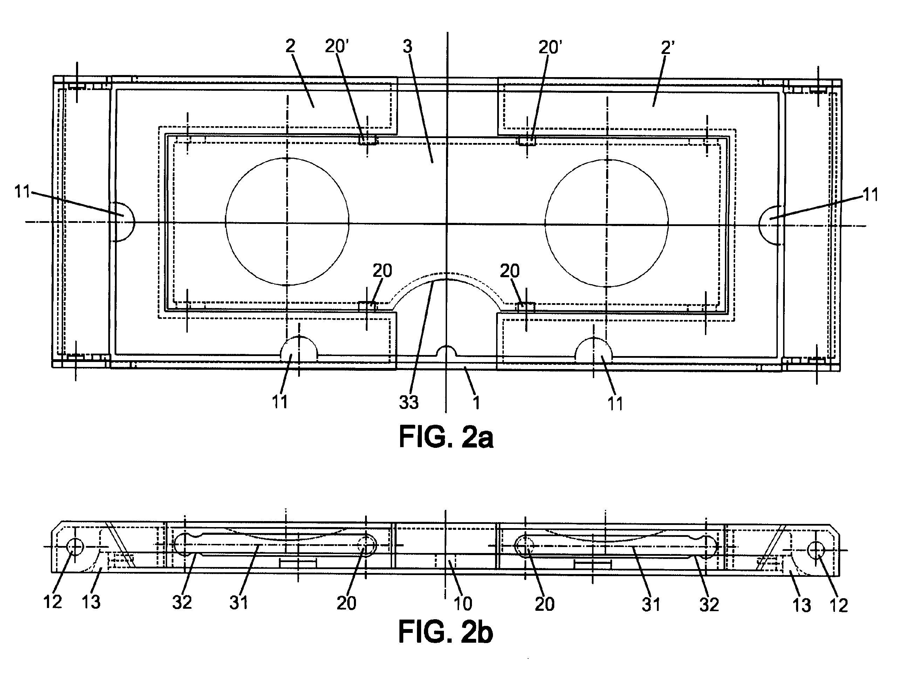

Avantageusement ladite visionneuse peut passer d'une position de moindre encombrement, sensiblement à plat (Figures 2a et 2b), dans laquelle lesdites branches 2, 2' ainsi que ledit élément support d'optiques 3 sont rabattus contre ledit élément support d'image 1, vers une position d'utilisation, en volume (Figure 1a,) dans laquelle ledit élément support d'optiques 3 et ledit élément support d'image 1 sont parallèles entre eux, écartés l'un de l'autre d'une distance définie par le déploiement des branches 2,2', et correspondant à la distance focale des optiques 30.

Selon un autre mode de réalisation particulier de l'invention, les rails 31,31' et les pions 20,20' peuvent être inversés, les rails 31,31' étant alors disposés sur les bords des branches 2,2' et les pions 20,20' sur le support d'optiques 3.

Selon le mode de réalisation illustré, ledit élément support d'otiques 3 est de longueur inférieure ou égale audit élément support d'image 1, de préférence inférieure audit élément support d'image 1. Dans la position d'utilisation et tel qu'illustrée à la figure 1a, ledit élément support d'image 1, les branches 2,2' et ledit élément support d'optiques 3 forment un trapèze isocèle.

Selon le mode de réalisation non limitatif de la figure 1a, chacune des branches 2,2' est de longueur inférieure à la moitié de l'élément support d'image 1 et de telle manière que les deux branches 2,2' ne se superposent pas dans ladite position de moindre encombrement. De manière préférentielle, les quatre éléments sont fabriqués dans un matériau plastique par moulage et sont constitués chacun d'une pièce d'un seul tenant.

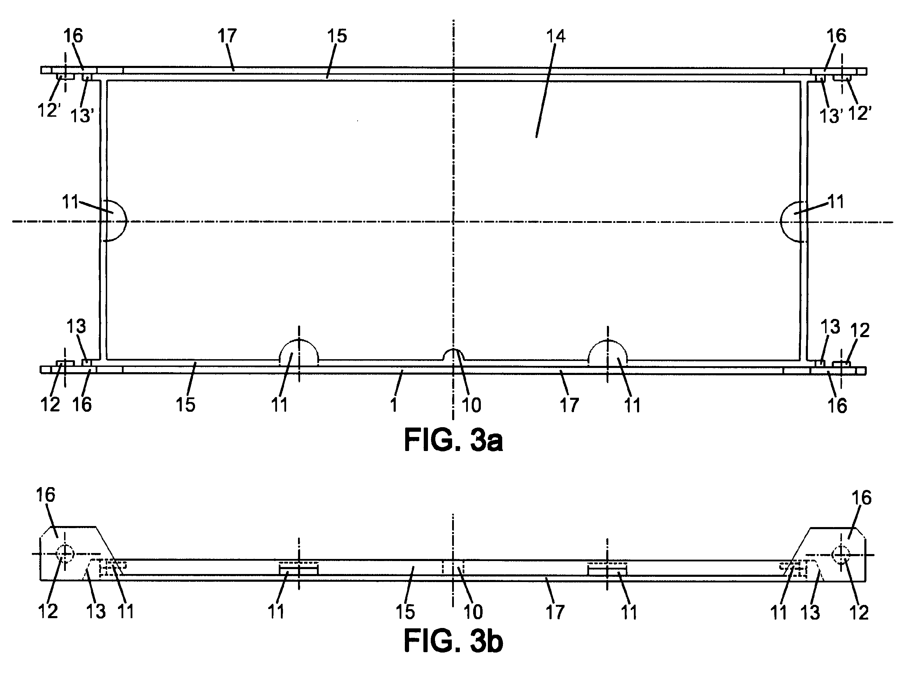

Comme on peut l'observer aux figures 3a et 3b, selon un exemple de réalisation, l'élément support d'image 1 comprend une paroi plane 14, notamment rectangulaire, destinée à recevoir une image à visionner et comprend un contour 15 de faible hauteur s'élevant de ladite paroi plane 14, les bords supérieur et inférieur du contour 15 étant notamment légèrement décalés de manière à former un rebord 17 de part et d'autre de l'élément support d'image 1. L'image est maintenue contre la paroi 14 par le biais de languettes de maintien 11 disposées sur le contour 15, notamment au niveau des bords latéraux et inférieur de l'élément support d'image 1. Chaque languette de maintien 11 est saillante du contour 15, écartée par rapport à la paroi 14 de manière à définir un espace d'insertion pour la réception et le maintien d'un bord de l'image.

Ledit élément support d'image 1 et chacune des branches 2,2' sont articulés en pivot au moyen de deux ergots 12,12' dudit élément support d'image 1 et coopérant avec deux orifices 21,21' complémentaires des branches 2, 2'.

Par exemple, l'élément support d'image 1 peut comprendre également, à chacune de ses extrémité une patte 16 disposée notamment dans le prolongement du rebord 17. Chaque patte 16 est munie d'un ergot 12,12' disposé sur la face interne de la patte 16, destiné à coopérer avec l'un des orifices 21, 21' d'une branche 2, 2'. Les ergots 12,12' sont placés en vis-à-vis, deux à deux pour former des axes de pivotement, parallèles entre eux, permettant les déploiements respectifs des branches 2,2' par mouvements de rotation.

Des moyens de butée 13,13' sont également disposés sur ledit élément support d'image 1 et de telle façon à venir en contact avec chacune des branches 2,2' dans ladite position d'utilisation, pour bloquer l'ouverture des branches.

Par exemple, selon un mode de réalisation, non limitatif, les moyens de butée 13,13' sont disposés sur l'élément support d'image 1, les moyens de butée 13,13' étant notamment disposés dans le prolongement du contour 15 à proximité des ergots 12.

Ces moyens de butée 13,13' sont aptes à coopérer avec les extrémités des branches 2,2' et bloquent l'ouverture des branches 2,2' selon un angle α plus ou moins grand. L'angle α, formé entre la branche 2 ou 2' et le plan dudit élément du support d'image 1 peut être compris entre 45° et 90°, de préférence entre 55° et 80°.

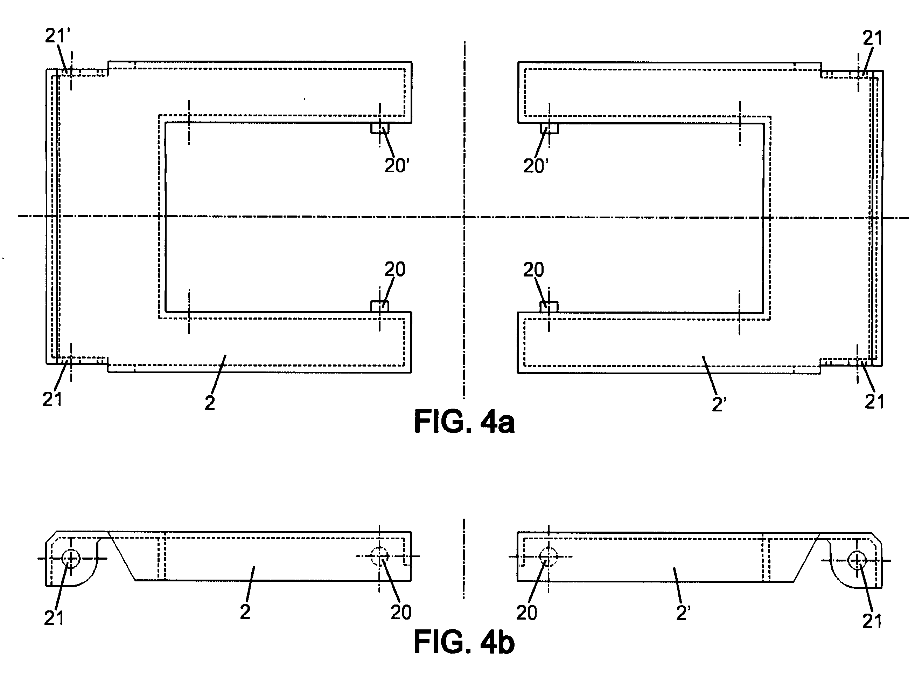

Ces branches 2 et 2', visibles aux figures 4a et 4b, en forme de U peuvent comprendre à une de leur extrémité les orifices 21, 21' disposés en vis-à-vis de façon à créer un axe de rotation en coopérant par emboitement avec les ergots 12,12' de l'élément support d'image 1. En position de moindre encombrement, selon un mode de réalisation, les branches 2 et 2' sont rabattues contre l'élément support d'image 1 par le biais d'une rotation jusqu'à réaliser un emboitement de type boitier de CD.

Les branches 2 et 2' comprennent également lesdits pions 20,20' disposés en vis-à-vis à l'autre extrémité des branches, à l'intérieur du U. Ces pions 20,20' sont destinés à coopérer avec les rails 31,31' de l'élément support d'optiques 3.

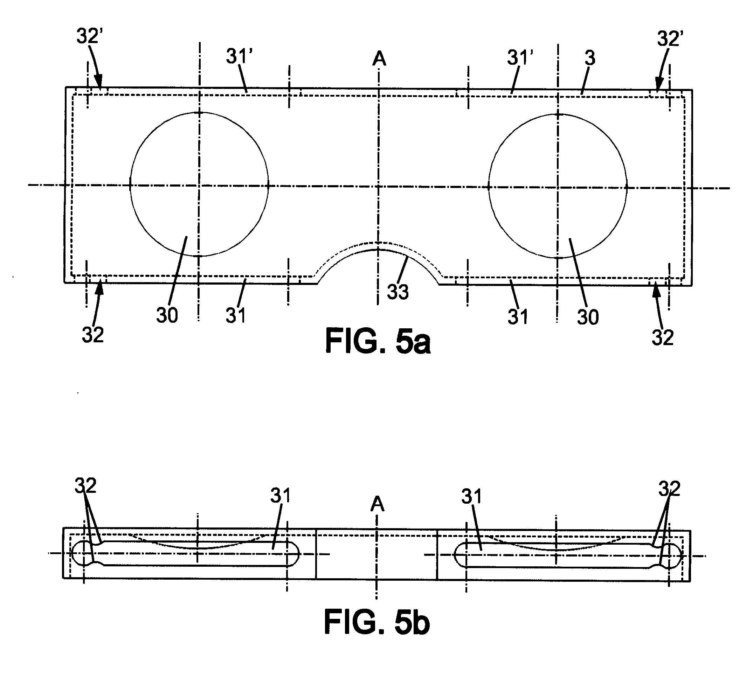

L'élément support d'optiques 3, illustré aux figures 5a et 5b, comprend un nez selle 33 et un couple d'optiques 30, notamment convexes et équidistantes par rapport au plan de symétrie A de l'élément support d'optiques 3. L'élément de support d'optiques 3, est de préférence de forme parallélépipédique. Avantageusement l'élément support d'optiques 3 peut être réalisé dans un matériau de type plastique transparent et être notamment d'une épaisseur similaire à celle des branches 2,2' de telle manière que la visionneuse soit pliable à plat en position de moindre encombrement, en prenant un aspect monobloc.

L'écartement entre les optiques 30 correspond à un écartement moyen de deux yeux. Avantageusement, selon un mode de réalisation, les deux optiques 30 et l'élément support d'optiques 3 forment une pièce d'un seul tenant, en plastique transparent.

Selon un autre mode de réalisation particulier de l'invention, les optiques 30 peuvent être des éléments rapportés, notamment réalisés en verre, par exemple, et fixés à l'élément support d'optiques 3.

L'élément support d'optiques 3 comprend notamment sur ses tranches supérieure et inférieure, les rails 31,31' disposés notamment symétriquement par rapport au plan A. La longueur des rails 31,31' est dimensionnée pour fixer l'écartement entre ledit élément support d'image 1 et ledit élément support d'optique 3, en position déployé du dispositif. Cet écartement prédéfini permet de fixer la distance focale du couple d'optiques 30 une fois la visionneuse déployée. Chaque paire de pions 20,20' coopère avec deux paires de rails correspondant 31,31', les pions venant coulisser dans les rails lors de l'ouverture de la visionneuse. Lors du coulissement, les pions 20,20' autorisent également un mouvement de rotation de chacune des branches 2,2' par rapport audit élément support d'optiques 3.

Avantageusement, les rails 31,31' peuvent comprendre des moyens de blocage 32,32' à l'une de leur extrémité pour bloquer le coulissement des pions 20,20' dans la position d'utilisation de la visionneuse. Ces moyens de blocage 32,32' peuvent être formés par un rétrécissement de la largeur des rails 31,31' de façon à empêcher les pions 20,20' de coulisser, après passage d'un point dur. Ce blocage est réversible afin de permettre le repliage de la visionneuse.

Selon un mode de réalisation particulier de l'invention, non illustré, des moyens de blocages, réversibles, peuvent être disposés à l'autre extrémité des rails 31,31' de telle façon à empêcher une ouverture intempestive de la visionneuse lorsqu'elle se trouve dans sa position de moindre encombrement.

Comme on peut le voir sur la figure 1b, la visionneuse est dans la position de moindre encombrement dans laquelle les branches 2,2' ainsi que l'élément support d'optiques 3 sont rabattus contre l'élément support d'image 1 selon un même plan défini par l'élément support d'image 1.

Comme on peut l'observer sur les figures 2a et 2b, selon un mode de réalisation, les branches 2,2' sont de même largeur que l'élément support d'image 1, le bord des branches 2,2' venant reposer contre ledit rebord 17. Dans sa position de moindre encombrement la visionneuse peut prendre un aspect monobloc et notamment la forme d'un parallélépipède rectangle, permettant ainsi de faciliter son rangement.

Comme on peut l'observer à la figure 2a, selon un mode de réalisation, les volumes intérieurs des branches 2 et 2' en forme de U définissent un logement apte à recevoir l'élément support d'optiques 3 dans la position de moindre encombrement, l'élément support d'optiques 3 étant notamment dimensionné pour s'emboiter dans le logement défini par les branches 2 et 2', au jeu d'emboitement près.

Selon l'exemple illustré, lorsqu'un utilisateur souhaite déployer la visionneuse en position d'utilisation pour observer une image en relief, il saisit les branches 2 et 2' et les actionne en rotation autour de leur axe. Le déploiement des branches a pour conséquence de lever l'élément support d'optiques 3 grâce aux pions 20,20' qui coulissent dans les rails 31,31' de l'élément support d'optiques 3. Avantageusement, les pions 20,20' arrivent en butée à l'extrémité des rails 31,31' et sont notamment maintenus en place par les moyens de blocage 32,32' en même temps que les branches arrivent en contact avec les moyens de butée 13.

Une fois en position d'utilisation, l'élément support d'optiques 3 et l'élément support d'image 1 sont parallèles entre eux et écartés l'un de l'autre d'une distance définie par le déploiement des branches 2,2', l'ensemble adoptant alors une forme notamment trapézoïdale. Avantageusement, la distance d'écartement entre l'élément support d'optiques 3 et l'élément support d'image 1 est réglée pour correspondre à la distance focale des optiques et obtenir un visionnage net de l'image stéréoscopique en relief.

Selon un mode de réalisation particulier de l'invention, illustré sur les figures, l'élément support d'images 1 comprend un détrompeur 10 apte à coopérer avec une encoche présente notamment sur le bas de l'image à visionner. Un tel détrompeur 10 permet de positionner l'image dans le bon sens et dans la bonne position aisément tout en empêchant l'image de bouger latéralement.

Préférentiellement, la visionneuse est fournie avec une série d'images stéréoscopiques interchangeables.

Selon un autre mode de réalisation particulier de l'invention, l'assemblage de l'élément support d'image 1, de l'élément support d'optiques 3 et des deux branches 2,2' est réalisé sans élément rapporté, les pions 20,20' et les ergots 12,12' étant respectivement moulés dans la même pièce que la branche 2,2' et l'élément support d'image 1.

Naturellement, d'autres modes de réalisation auraient pu être envisagés par l'homme du métier sans pour autant sortir du cadre de l'invention définie par les revendications ci-après.

### NOMENCLATUTRE

1 : Elément support d'image
10 : Détrompeur
11 : Languettes de maintien
12,12' : Ergots
13,13' : Moyens de butée
14 : Paroi plane
15 : Contour
16 : Pattes
17 : Rebords

2, 2' : Branches
20, 20' : Pions
21, 21': Orifices

3 : Elément support d'optiques
30 : Optiques
31,31' : Rails
32,32' : Moyens de blocage
33 : Nez selle

A : Plan de symétrie (Eléments support d'optiques 3).

## Revendications

1. Visionneuse, pliable, destinée pour la vision en relief d'une image stéréoscopique, **caractérisée en ce qu'**elle comprend quatre éléments rigides, dont un élément support d'image (1), un élément support d'optiques (3) pour deux optiques, et deux branches (2,2') en forme de U, chacune des branches (2,2') coopérant à l'une de ses extrémités avec ledit élément support d'image (1) et, à l'autre extrémité de ladite branche avec ledit élément support d'optiques (3), lesdites branches (2,2') étant articulées , d'une part, audit élément support d'image (1), suivant deux axes de pivot, parallèles entre eux, et d'autre part, audit élément support d'optiques, chacune des branches (2,2') au moyen de deux pions (20,20'), en vis-à-vis et coopérant au coulissement avec deux rails (31,31') parallèles et disposés au niveau de deux bords dudit élément support d'optique,
et dans laquelle ladite visionneuse peut passer d'une position de moindre encombrement, sensiblement à plat, dans laquelle lesdites branches (2,2') ainsi que ledit élément support d'optiques (3) sont rabattus contre ledit élément support d'image (1), vers une position d'utilisation, en volume, dans laquelle ledit élément support d'optique (3) et ledit élément support d'image (1) sont parallèles entre eux, écartés l'un de l'autre d'une distance définie par le déploiement des branches (2,2').

2. Visionneuse selon la revendication 1 dans laquelle, dans la position de moindre encombrement les volumes intérieurs des branches (2, 2') en forme de U définissent un logement pour la réception de l'élément support d'optiques (3), au jeu d'emboitement près.

3. Visionneuse selon la revendication 1 ou 2 dans laquelle, ledit élément support d'image (1) et chacune des branches (2, 2') sont articulés en pivot au moyen de deux ergots (12,12') dudit élément support d'image (1) et coopérant avec deux orifices (21,21') complémentaires des branches (2,2').

4. Visionneuse selon l'une des revendications 1 à 3 dans laquelle, ledit élément support d'image (1) comprend une paroi plan sur laquelle est destinée à être plaquée une image, ainsi que des languettes de maintien (11) au niveau des bords dudit élément support d'image (1), chaque languette de maintien (11) étant écartée par rapport à ladite paroi plan afin de définir un espace d'insertion prévu pour la réception et le maintien d'un bord de l'image.

5. Visionneuse selon l'une des revendications 1 à 4 dans laquelle, lesdits rails (31,31') dudit élément support d'optiques (3) comprennent des moyens de blocages (32,32') des pions (20,20') aux extrémités des rails conçus pour bloquer de manière réversible le coulissement dans ladite position d'utilisation en volume et/ou dans ladite position de moindre encombrement de la visionneuse.

6. Visionneuse selon l'une des revendications 1 à 5 dans laquelle, ledit élément support d'image (1) comprend des moyens de butée (13,13') venant en contact avec chacune des branches (2,2') dans ladite position d'utilisation, pour bloquer l'ouverture des branches.

7. Visionneuse selon l'une des revendications 1 à 6 dans laquelle, l'élément support d'image (1), l'élément support d'optiques (3) et les branches (2,2') sont constitués chacun par une pièce plastique d'un seul tenant, lesdites pièces plastiques étant assemblées et articulées entre elles sans élément rapporté, grâce à des parties d'assemblage monoblocs avec lesdites pièces plastiques.

8. Visionneuse selon l'une des revendications 1 à 7 dans laquelle, ledit élément support d'optiques est une pièce plastique transparente, lesdites deux optiques d'un seul tenant avec ladite pièce plastique transparente.

9. Visionneuse selon l'une des revendications 1 à 8, dans laquelle, les rails (31,31') et les pions (20,20') sont inversés, les rails (31,31') étant disposés sur les bords des branches (2,2') et les pions (20,20') sur le support d'optiques (3).

10. Kit comprenant une visionneuse selon l'une des revendications 1 à 9, et au moins une image stéréoscopique destinée à coopérer avec ledit élément support d'image de ladite visionneuse.

11. Kit selon la revendication 10 dans lequel, ledit élément support d'image comprend un détrompeur (10), mâle, et coopérant avec une encoche de ladite image stéréoscopique pour assurer l'orientation et le positionnement centré de ladite image stéréoscopique sur ledit élément support d'image (1).

12. Procédé de fabrication d'une visionneuse selon l'une des revendications 1 à 9 comprenant les étapes suivantes :
- obtention par moulage d'un plastique de l'élément support d'image (1), l'élément support d'optiques (3) et des branches (2, 2') ;
- assemblage de l'élément support d'image (1), l'élément support d'optiques (3) et des branches (2, 2') grâce à des parties d'assemblage monoblocs avec lesdits éléments.

## Patentansprüche

1. Faltbarer Bildbetrachter, der für das plastische Sehen eines stereoskopischen Bildes bestimmt ist, **dadurch gekennzeichnet, dass** er vier steife Elemente enthält, darunter ein Bildträgerelement (1), ein Optikträgerelement (3) für zwei Optiken, und zwei Schenkel (2, 2') in Form eines U, wobei jeder der Schenkel (2, 2') an einem seiner Enden mit dem besagten Bildträgerelement (1) zusammenwirkt, und am anderen Ende des besagten Schenkels mit dem besagten Optikträgerelement (3), wobei die besagten Schenkel (2, 2') gelenkig ausgeführt sind, über zwei parallel zueinander liegende Drehachsen mit dem besagten Bildträgerelement (1) einerseits und mit dem besagten Optikträgerelement andererseits, und jeder der Schenkel (2, 2') jeweils mit zwei Stiften (20, 20'), die einander gegenüber liegen und mit zwei Schienen (31, 31'), die parallel verlaufen und im Bereich der beiden Ränder des besagten Optikträgerelements angeordnet sind, an der Gleitbewegung teilhat,
und der besagte Bildbetrachter von einer Stellung mit geringstem Platzbedarf , die in etwa flach ist, in der die besagten Schenkel (2, 2'), sowie das besagte Optikträgerelement (3) auf das Bildträgerelement (1) geklappt sind, in eine Nutzstellung übergehen kann, die ein Volumen aufweist, in der das besagte Optikträgerelement (3) und das besagte Bildträgerelement (1) parallel und in einem Abstand zueinander stehen, der durch die aufgeklappten Schenkel (2, 2') definiert wird.

2. Bildbetrachter nach Anspruch 1, bei dem die Innenräume der Schenkel (2, 2') in U-Form in der Stellung mit geringstem Platzbedarf eine bis auf das Verschachtelungsspiel genaue Aufnahme zum Einsetzen des Optikträgerelements (3) bilden.

3. Bildbetrachter nach Anspruch 1 oder 2, bei dem das besagte Bildträgerelement (1) und jeder der Schenkel (2, 2') über zwei Zapfen (12, 12') des besagten Bildträgerelements (1) drehbar artikuliert sind, und dabei mit den beiden komplementären Öffnungen (21, 21') in den Schenkeln (2, 2') zusammenwirken.

4. Bildbetrachter nach einem der Ansprüche 1 bis 3, in dem das besagte Bildträgerelement (1) eine ebene Wand enthält, die dafür vorgesehen ist, um daran ein Bild anzulegen, sowie Haltelaschen (11) im Bereich der Ränder des besagten Bildträgerelements (1), wobei jede Haltelasche (11) im Verhältnis zur besagten ebenen Wand beabstandet ist, um einen Einführraum zu bilden, der zur Aufnahme und zum Festhalten eines Bildrandes vorgesehen ist.

5. Bildbetrachter nach einem der Ansprüche 1 bis 4, in dem die besagten Schienen (31, 31') auf dem besagten Optikträgerelement (3) Vorrichtungen zum Blockieren (32, 32') der Stifte (20, 20') an den Enden der Schienen enthalten, die gestaltet wurden, um die Gleitbewegung in die besagte Nutzstellung mit Volumen und/ oder in die besagte Stellung mit geringstem Platzbedarf des Bildbetrachters in umkehrbarer Form zu blockieren.

6. Bildbetrachter nach einem der Ansprüche 1 bis 5, in dem das besagte Bildträgerelement (1) Anschlagvorrichtungen (13, 13') enthält, die in der besagten Nutzstellung in Kontakt mit den Schenkeln (2, 2') treten, um die Öffnung der Schenkel zu blockieren.

7. Bildbetrachter nach einem der Ansprüche 1 bis 6, in dem das Bildträgerelement (1), das Optikträgerelement (3) und die Schenkel (2, 2') jeweils aus einem einstückigen Kunststoffteil bestehen, wobei die besagten Kunststoffteile ohne Einsätze und nur durch Monoblock-Verbindungsteile in den besagten Kunststoffteilen miteinander verbunden und artikuliert sind.

8. Bildbetrachter nach einem der Ansprüche 1 bis 7, in dem das besagte Optikträgerelement ein transpartentes Kunststoffteil ist, und die besagten beiden Optiken einstückig mit dem besagen transpartenten Kunststoffteil ausgeführt sind.

9. Bildbetrachter nach einem der Ansprüche 1 bis 8, in dem die Schienen (31, 31') und Stifte (20, 20') umgekehrt sind, und die Schienen (31, 31') an den Rändern der Schenkel (2, 2'), und die Stifte (20, 20') auf dem Optikträger (3) angeordnet sind.

10. Bausatz, umfassend einen Bildbetrachter nach einem der Ansprüche 1 bis 9, und zumindest ein stereoskopisches Bild, das dazu bestimmt ist, mit dem besagten Bildträgerelement des besagten Bildbetrachters zusammenzuwirken.

11. Bausatz nach Anspruch 10, bei dem das besagte Bildträgerelement eine Unverwechselbarkeitseinrichtung (10) enthält, die steckbar ist und mit einer Aussparung im besagten stereoskopischen Bild zusammenwirkt, um die Orientierung und die mittige Positionierung des besagten stereoskopischen Bildes auf dem besagten Bildträgerelement (1) zu gewährleisten.

12. Verfahren zur Herstellung eines Bildbetrachters nach einem der Ansprüche 1 bis 9, das die folgenden Schritte enthält:
- den Erhalt einer Plastik des Bildträgerelements (1), des Optikträgerelements (3) und der Schenkel (2, 2') durch Formguss;
- das Zusammensetzen des Bildträgerelements (1), des Optikträgerelements (3) und der Schenkel (2, 2') dank der Monoblock-Verbindungsteile in den besagten Elementen.

## Claims

1. Viewer, foldable, intended for viewing in relief a stereoscopic image, **characterised in that** it comprises four rigid elements, of which an image holder element (1), an optic holder element (3) for two optics, and two U-shaped arms (2, 2'), with each of the arms (2, 2') cooperating at one of its ends with said image holder element (1) and, at the other end of said arm with said optic holder element (3), said arms (2, 2') being articulated, on the one hand, with said image holder element (1), according to two pivot axes, parallel to each other, and on the other hand, with said optic holder element, with each of the arms (2, 2') by means of two pins (20, 20'), facing and cooperating in sliding with two rails (31, 31') parallel and arranged on two edges of said optic holder element,
and wherein said viewer can switch from a position of lesser size, substantially flat, wherein said arms (2, 2') as well as said optic holder element (3) are folded back against said image holder element (1), into a position of use, by volume, wherein said optic holder element (3) and said image holder element (1) are parallel to one another, separated from each other by a distance defined by the deployment of the arms (2, 2').

2. Viewer according to claim 1 wherein, in the position of lesser size the inner volumes of the U-shaped arms (2, 2') define a housing for receiving the optic holder element (3), to the nearest set of nesting.

3. Viewer according to claim 1 or 2 wherein, said image holder element (1) and each of the arms (2, 2') are articulated as a pivot by means of two lugs (12, 12') of said image holder element (1) and cooperating with two complementary orifices (21, 21') of the arms (2, 2').

4. Viewer according to one of claims 1 to 3 wherein, said image holder element (1) comprises a plane wall whereon is intended to be thrust an image, as well as retaining tabs (11) on edges of said image holder element (1), with each retaining tab (11) being separated in relation to said plane wall in order to define an insertion space provided for receiving and for maintaining an edge of the image.

5. Viewer according to one of claims 1 to 4 wherein, said rails (31, 31') of said optic holder element (3) comprise blocking means (32, 32') of the pins (20, 20') at the ends of the rails designed to reversibly block the sliding in said position of use in volume and/or in said position of lesser size of the viewer.

6. Viewer according to one of claims 1 to 5 wherein, said image holder element (1) comprises means of abutment (13, 13') that come into contact with each of the arms (2, 2') in said position of use, in order to block the opening of the arms.

7. Viewer according to one of claims 1 to 6 wherein, the image holder element (1), the optic holder element (3) and the arms (2, 2') are each formed by a plastic part integrally, said plastic parts being assembled and articulated together without any added element, thanks to one-piece assembly parts with said plastic parts.

8. Viewer according to one of claims 1 to 7 wherein, said optic holder element is a transparent plastic part, said two optics integrally with said transparent plastic part.

9. Viewer according to one of claims 1 to 8, wherein the rails (31, 31') and the pins (20, 20') are inverted, with the rails (31, 31') being arranged on the edges of the arms (2, 2') and the pins (20, 20') on the optic holder (3).

10. Kit comprising a viewer according to one of claims 1 to 9, and at least one stereoscopic image intended to cooperate with said image holder element of said viewer.

11. Kit according to claim 10 wherein, said image holder element comprises a foolproof device (10), male, and cooperating with a notch of said stereoscopic image in order to provide for the orientation and the centred positioning of said stereoscopic image on said image holder element (1).

12. Method for manufacturing a viewer according to one of claims 1 to 9 comprising the following steps:
- obtaining via plastic moulding the image holder element (1), the optic holder element (3) and arms (2, 2');
- assembly of the image holder element (1), the optic holder element (3) and arms (2, 2') thanks to one-piece assembly parts with said elements.
